**Europäisches Patentamt**

**European Patent Office**

**Office européen des brevets**

(19)

(11) Veröffentlichungsnummer: **0 005 220**
**B1**

(12) # EUROPÄISCHE PATENTSCHRIFT

(45) Veröffentlichungstag der Patentschrift:
**27.10.82**

(21) Anmeldenummer: **79101197.6**

(22) Anmeldetag: **20.04.79**

(51) Int. Cl.³: **H 04 Q 11/04**

(54) Schaltungsanordnung für zeitmultiplex digital durchschaltende Fernmelde-, insbesondere Fernsprechvermittlungsanlagen.

(30) Priorität: **29.04.78 DE 2819119**

(43) Veröffentlichungstag der Anmeldung:
**14.11.79 Patentblatt 79/23**

(45) Bekanntmachung des Hinweises auf die Patenterteilung:
**27.10.82 Patentblatt 82/43**

(84) Benannte Vertragsstaaten:
**BE CH FR GB IT NL SE**

(56) Entgegenhaltungen:
**DE-A-1 945 155**
**DE-B-1 185 249**
**DE-B-1 910 975**
**DE-C-2 314 272**
**FR-A-2 026 141**
**FR-A-2 367 399**
**GB-A-1 272 992**
**NACHRICHTENTECHNIK, Band 17, Heft 4, April 1967, Berlin, GRIMM: »Konzentrator-Verbindungsfeld nach dem Prinzip der Zeitteilung«, Seiten 133 bis 135.**

(73) Patentinhaber: **Telefonbau und Normalzeit GmbH, Mainzer Landstrasse 128-146 Postfach 4432, D-6000 Frankfurt (Main) (DE)**

(72) Erfinder: **Agricola, Manfred, Dipl.-Ing., Zeuläckerstrasse 10B, D-6000 Frankfurt 60 (DE)**
Erfinder: **Dietze, Klaus, Dipl.-Ing., Niedwiesenstrasse 25A, D-6000 Frankfurt/M. 50 (DE)**
Erfinder: **Mayr-Stein, Horst, Dipl.-Ing., Spiessfeldstrasse 1, D-6382 Friedrichsdorf (DE)**
Erfinder: **Reimer, Karl-Heinz, Brandenburgerstrasse 1, D-6051 Ober-Roden (DE)**
Erfinder: **Reinhold, Andreas, Ing.-grad, Jägerstrasse 9, D-6457 Maintal 3 (DE)**
Erfinder: **Schmid, Adolf, Ing.grad, Hammarskjöldring 27, D-6000 Frankfurt 50 (DE)**
Erfinder: **Schosnig, Johannes-Georg, Dipl.-Ing., An der Lühe 10, D-6000 Frankfurt (Main) 90 (DE)**

**IEEE INTERNATIONAL CONFERENCE ON COMMUNICATIONS, Band 3, Chicago, 12—15, Juni 1977, New York, LITTERER et al., »No 3 EAX trunks and device circuits«, Seiten 27.3—204 bis —208.**

Schaltungsanordnung für zeitmultiplex digital durchschaltende Fernmelde-,
insbesondere Fernsprechvermittlungsanlagen

Die Erfindung betrifft eine Schaltungsanordnung für zeitmultiplex digital durchschaltende Fernmelde-, insbesondere Fernsprechvermittlungsanlagen mit einem besonderen Koppelfeld für die Ankopplung von Hörzeichen an Anschlußorgane, das neben dem für den Austausch von Sprach- und Dateninformationen vorgesehenen Verbindungskoppelfeld die Verbindung zwischen Anschlußorganen und Hörzeichensendern herstellt und digital arbeitet.

Die Aufgabe von Vermittlungsanlagen besteht nicht allein darin, eine Verbindung durchzuschalten, um einen Informationsaustausch zwischen zwei Anschlußstellen zu ermöglichen. Besonders während der Aufbauphase einer vom Teilnehmer selbsttätig aufgebauten Verbindung sind Informationen an den Teilnehmer erforderlich, um ihn über den Zustand seiner Verbindung zu unterrichten.

Die bei jeder Verbindung zuerst erforderliche Information über die Wahlaufnahmebereitschaft der Vermittlungseinrichtung wird dem Teilnehmer als Wählton nach Abnehmen des Handapparates übermittelt. Der Wählton besteht meist aus einer genormten Frequenz, die als Dauerton oder in einem bestimmten Rhythmus gesendet wird.

Hat der Teilnehmer nach dem Hören des Wähltones seine Wahlbehandlung vollständig durchgeführt, so wird nach Prüfung der möglichen Verbindungswege und des Zustandes des gewünschten Anschlusses ein Frei- oder Besetztton dem Teilnehmer zugesendet. Der Freiton wird meist im gleichen Intervall gesendet, mit dem der gewünschte Teilnehmer gerufen wird. Dagegen ist der Besetztton im Rhythmus deutlich unterschiedlich, z. B. eine schnelle Folge der genormten Frequenz.

Neben diesen Hörtönen gibt es noch weitere Möglichkeiten, einen anrufenden Teilnehmer zu informieren. Es ist z. B. sinnvoll, einem Teilnehmer, der einen nicht existenten Verbindungsweg oder Anschluß angewählt hat, einen besonderen Hinweis zu geben. In diesem Fall genügt der einfache Frei- oder Besetztton nicht, weil der Teilnehmer immer wieder versuchen wird, die gewünschte Verbindung zu bekommen. Eine solche Hinweisinformation besteht z. B. aus einer besonderen Tonfolge und einer nachfolgenden Aussage: »Kein Anschluß unter dieser Nummer!«.

Darüber hinaus besteht in vielen Fällen der Bedarf, den Teilnehmern allgemein gültige Informationen zuzusenden. Diese Ansage-Sonderdienste können z. B. enthalten: Zeitansage, Wetterbericht, Nachrichten u. a.

In den meisten Vermittlungseinrichtungen werden Hörtöne, Hinweisinformationen und Ansagetexte über das auch für Gesprächsverbindungen benutzte gemeinsame Koppelnetzwerk durchgeschaltet. Das hat zur Folge, daß während der Anschaltung von Sondersignalen der eingangs erwähnten Art, die Koppelwege für echte Verbindungen nicht zur Verfügung stehen. Damit ist ein bestehendes Koppelnetzwerk für echte Verbindungen weniger leistungsfähig.

Um diesen Nachteil zu beseitigen, wurde für PCM-Vermittlungsanlagen vorgeschlagen, Tonsignale digital abzuspeichern und in dieser Form direkt den Anschlußorganen zuzuleiten. Eine solche Anordnung ist beschrieben in der DE-OS 1 945 155. In der DE-PS 2 314 272 wird beschrieben, wie auch der Rhythmus eines Hörtones in die digitale Form mit einbezogen werden kann.

Diese hier erwähnten Anordnungen haben jedoch den Nachteil, daß sie nur bei Tonfrequenzsignalen anwendbar sind, weil der Speicheraufwand für Ansagetexte in digitaler Form erheblich steigen würde.

Aus der DE-AS 1 961 725 ist eine zeitmultiplexe Fernsprechvermittlungsanlage bekannt, die mit PAM-Resonanztransfer arbeitet. Bei dieser vorbekannten Anlage wird den einzelnen Teilnehmerschaltungen über eine gesonderte Rufstromleitung wahlweise Rufstrom zugeführt. Sofern in keiner der Teilnehmerschaltungen Rufstrom benötigt wird, kann zu Prüfzwecken anstatt des Rufstromgenerators an die Rufstromleitung auch ein Prüfsignalgenerator angeschlossen werden, so daß in diesem Fall zu einem ausgewählten Teilnehmer eine Prüftonfrequenzspannung übertragbar ist. In der vorbekannten Vermittlungsanlage ist weiterhin noch eine zeitmultiplexe Signalspannungsleitung vorgesehen, über die die augenblicklichen Zustände auf der jeweiligen Teilnehmerleitung einer zentralen Steuerung mitgeteilt werden können.

Die vorliegende Anmeldung geht daher von einer Schaltungsanordnung aus gemäß dem Oberbegriff und hat sich die Aufgabe gestellt, bei einer derartigen Schaltungsanordnung eine den Sprechweg nicht belastende Möglichkeit vorzusehen, eine Vielzahl von tonfrequenten Signalen zwischen einzelnen Sendern, Empfängern und Anschlußschaltungen in digitaler Form mit einem geringen Steuerungsaufwand zu übertragen. Diese Aufgabe wird erfindungsgemäß durch die in dem kennzeichnenden Teil des Hauptanspruchs angegebene Merkmalskombination gelöst.

Der Vorteil der Erfindung besteht in erster Linie darin, daß für alle zwischen der Vermittlungsanlage selbst und den Anschlüssen auszutauschende Signale ein Sammelschienensystem zur Verfügung steht, wodurch die Belastung des übrigen Koppelnetzwerkes mit solchen Verbindungen gänzlich vermieden wird.

Durch die feste Zuordnung von Zeitkanälen zu den verschiedenen Sondersignalen ist je nach Anwendungsfall eine Vermittlungsanlage leicht mit den entsprechenden Signalarten auszustatten. Da die gesamten Steuerfunktionen für das besondere Koppelfeld von einer peripheren Steuereinheit vorgenommen werden, ist für alle diese Verbindungen in einer zentralen Steuereinheit kein zusätzlicher Aufwand erforderlich. Alle Verbindungen mit Tonempfängern, Wahlempfängern, Tonsendern und Ansagetextsendern werden vom übrigen für echte Verbindungen vorhandenen Verbindungs-Koppelnetzwerk KV ferngehalten. Durch diese klare Gliederung lassen sich Vermittlungsanlagen einfacher optimal dimensionieren. So läßt sich z. B. ein weiteres besonderes Koppelfeld für Sondersignale hinzufügen, ohne daß am Koppler KV der Anlage oder am Gesamtaufbau Änderungen notwendig werden. Durch die Anwendung von beispielsweise integrierten Multiplexer-Schaltungen sind die Aufwendungen pro Anschlußeinheit auch dann noch vertretbar.

Ein Ausführungsbeispiel der Erfindung wird nachfolgend anhand einer Zeichnung beschrieben. Zunächst sei angenommen, daß von einem mit Tonfrequenzwahl (MFV) ausgerüsteten Teilnehmer T aus eine Verbindung aufgebaut werden soll. Beim Abheben des Handapparates wird die periphere Informationsverarbeitungseinrichtung (IVP) veranlaßt, den Teilnehmeranschluß T-ANS über die Sammelschiene S-ES auf den für die Hörtonfrequenz (425 Hz) vorgesehenen Zeitkanal zu schalten. Ist ein freier Wahlempfänger verfügbar, so wird dieser über den ihm zugeordneten Zeitkanal an die Sendesammelschiene geschaltet. Der Teilnehmer hört den Wählton, weil eine rhythmische Unterbrechung des Dauertones von der IVP aus in der Anschlußschaltung ANS, dem CODEC, oder dem Schaltmittel U bewirkt wird. Ist kein freier Wahlempfänger verfügbar, so wird lediglich der Rhythmus geändert, so daß der Besetztton entsteht.

Sendeseitig ist der Teilnehmer T bei Wahlaufnahmebereitschaft über T-AMS, CODEC1, U1, S-SS, mit dem Wahlempfänger WE verbunden und kann auf diesem Weg seine Wahlinformation abgeben. Über den Weg vom Tonsender TS, COD, S-ES, U1, CODEC1, T-ANS hört der Teilnehmer den Wählton. Diese letztgenannte Teilverbindung wird am Schalter U1 aufgetrennt, sobald der Teilnehmer mit der Wahl begonnen hat. Die sendeseitige Verbindung zwischen T und WE bleibt so lange bestehen, bis der Teilnehmer eine auswertbare Wahlinformation abgegeben hat.

Bei dem dabei auftretenden Kriterium Wahlende wendet sich die IVP an eine zentrale Informationsverarbeitungseinrichtung IVZ, um den Zustand des gewünschten Teilnehmers, der möglicherweise einer anderen Teilnehmergruppe angehört, zu ermitteln. Ist dieser Anschluß frei, so muß außerdem ein freier Verbindungsweg durch das Koppelnetz KV gefunden und festgelegt werden.

Der rufende Teilnehmer wird wie zu Beginn auf den Tonkanal geschaltet, und hört den Ton entweder als Freiton- oder Besetztton. Der Wahlempfänger wird dabei abgeschaltet.

Erst dann, wenn sich der gewünschte Partner meldet, wird die im Koppelnetz KV vorgemerkte Verbindung durchgeschaltet, und die Schaltmittel U werden auf das Koppelnetz KV gesteuert. Vor dem Gesprächsbeginn ist der eine Verbindung aufbauende Teilnehmer also lediglich über das Sammelschinensystem des Koppelfeldes KF verbunden gewesen.

In gleicher Weise wird auch verfahren bei einem Teilnehmer mit Nummernschalterwahl mit dem einzigen Unterschied, daß die Wahlinformation nicht über die S-SS zum Wahlempfänger WE gelangt, sondern durch eine Abtasteinrichtung in der IVP direkt aufgenommen wird.

Ebenso wird auch eine Verbindung behandelt, die über eine externe Leitung EL und das Anschlußorgan L-ANS von einer anderen Vermittlungsstelle ankommt. Bezüglich des Empfangs von Wahlinformation und des Sendens von Tönen ist hier zwischen Teilnehmerstelle und Externleitung kein Unterschied zu machen.

Nun sei der Fall betrachtet, daß von einem Teilnehmer oder einer Externleitung aus z. B. die Rufnummer der automatischen Zeitansage gewählt wird. Alle Vorgänge bis zum Wahlende laufen wie bereits beschrieben ab. Wenn die Steuereinrichtung IVP die Rufnummer der Zeitansage erkannt hat, wird das anrufende Anschlußorgan T-ANS oder L-ANS über seine CODEC-Einrichtung und das Schaltmittel U mit der Empfangssammelschiene S-ES verbunden. Die Durchschaltung erfolgt auf einem Zeitkanal, z. B. 24, der dem Ansagesender AS für die Zeitansage fest zugeordnet ist. Diese Art von Verbindung kann also ausschließlich über das für Sondersignale vorgesehene besondere Koppelfeld KF abgewickelt werden, ohne daß Koppelpunkte oder Steuereinrichtungen von anderen Teilen der Anlage benötigt werden. Es ist auf diese Weise auch möglich, mehrere Anschlußorgane mit einem Zeitkanal gleichzeitig zu verbinden, wodurch sich eine besonders günstige Ausnutzung des mit voller Erreichbarkeit ausgestatteten besonderen Koppelfeldes ergibt.

Ein weiterer vorteilhafter Anwendungsfall der Erfindung ergibt sich, wenn z. B. der Teilnehmer T eine Verbindung über die externe Leitung aufzubauen wünscht, und dabei eine Umwandlung der Wahlinformationsart erfolgen muß. So ist es denkbar, daß MFV-Signale in Nummernschalterimpulsserien umgewandelt werden müssen. Auch die umgekehrte Umwandlung von Nummernschalterwahl in MFV-Wahl ist denkbar. Diese Version soll nachfolgend als Beispiel beschrieben werden.

Wenn ein Teilnehmer die zur Externverbindung erforderliche Ziffernfolge gewählt hat, wird eine Verbindung von der Leitung EL über L-ANS, CODECn, Un, KV-ES, U1, T-ANS zum Teilnehmer T geschaltet. Da aber die Externverbindung die nachfolgende Wahl in Form von MFV-Signalen verlangt, wird eine Verbindung zu Tonsendern TS wie folgt hergestellt.

Entsprechend der jeweils zu sendenden einer Wahlziffer zugeordneten Frequenzkombination wird zu einem dem Tonsender fest zugeordneten Zeitkanal eine Verbindung geschaltet von TS über COD, S-ES, Un, CODECn zum Anschlußorgan L-ANS. Nach Aussendung der entsprechenden

3

Frequenzkombination in der erforderlichen Länge wird nach einer definierten Pause auf den der nächsten zu sendenden Frequenzkombination zugeordneten Zeitkanal umgeschaltet. Auf diese Weise werden nacheinander die zu einer vollständigen Wahlinformation gehörenden Ziffern ausgesendet. Diese Art der Aussendung von Wahlinformation findet auch statt, wenn ein dazu berechtigter Teilnehmer eine für ihn individuell gespeicherte Rufnummer per Kurzwahl abruft. Die Einzelheiten (Speicher, Steuerung usw.) für diesen Vorgang sind nicht dargestellt und werden nicht näher beschrieben, weil sie nicht unmittelbar zum Gegenstand der Erfindung gehören.

Um die Zusammenarbeit von Vermittlungsanlagen, die über Externleitungen zusammengeschaltet sind, zu erleichtern, sind Tonempfänger TE vorgesehen. Diese werden bei der abgehenden Belegung einer Externleitung an die Verbindung geschaltet und dienen zunächst dazu, den Wählton zu empfangen und somit die Wahlaufnahmebereitschaft der anderen Anlage zu erkennen. Damit ist es möglich, eine gespeicherte Wahlinformation oder ein Teil davon zur richtigen Zeit abzurufen, und es wird vermieden, daß die Sendung von Wahlinformation zu früh beginnt. Es wird also eine Verbindung hergestellt, die vom TE über DEC, S-SS auf den zugeordneten Zeitkanal zu Un, CODECn, L-ANS zur Externleitung EL verläuft. Die periphere Steuerung IVP ist dann in der Lage, den Zeitpunkt des Aussendens von Wahlinformation zu erkennen. Diese Verbindung zum Tonempfänger kann außerdem benutzt werden, um ein Wahlende zu erkennen anhand des empfangenen Frei- oder Besetzttons. Im Besetztfall kann eine automatische Verbindungstrennung bewirkt werden, damit die belegte Leitung wieder frei wird. Der Besetztton zum Teilnehmer wird dann auf direktem Weg wie bereits beschrieben gesendet.

Wenn eine Rufnummer gewählt wurde, die nicht zu einer Verbindung führen kann, wird zu einem Teilnehmer oder zu einer Externleitung ein Hinweiston mit anschließender Ansage gesendet. Dabei wird zunächst der Tonsender TS für den ersten Ton über die Sammelschiene S-ES im zugehörigen Zeitkanal zu dem anrufenden Anschlußorgan für eine definierte Zeit angeschaltet.

Sodann wird nacheinander auf die Zeitkanäle für die nächsten Töne umgeschaltet. Zuletzt wird auf den Zeitkanal für die entsprechende Ansage geschaltet, die aus dem Ansagesender AS kommt. Hier lassen sich durch Programmierung der Steuerung beliebige Kombinationen zusammenstellen.

Für das Senden der Töne kann eine Anordnung aus Tonsender und Codierer ebenso verwendet werden, wie auch zyklisch abrufbare digital gespeicherte Informationsfolgen.

Aus diesen Beispielen geht hervor, daß bei Anwendung der Erfindung ein wesentlicher Teil der Verkehrsbelastung einer Anlage durch Sonderverbindungen, Verbindungsaufbauphasen, unvollständige Verbindungen usw. vom Koppelfeld KV und den dazu gehörenden Steuereinrichtungen ferngehalten werden kann.

Durch die vollkommene Erreichbarkeit des für Sondersignale vorgesehenen besonderen Koppelfeldes und die Möglichkeit der Parallelschaltung von Anschlußorganen auf den Zeitkanälen ist ein Sammelschienensystem in der Lage eine Vielzahl von Anschlußorganen zu bedienen.

Wie die Aufteilung der z. B. 30 Kanäle eines Sammelschienensystems zu den einzelnen Sondersignalen aussehen kann, zeigt die nachfolgende Tabelle.

| Kanal | Signale | |
|---|---|---|
| 1 | 1 | |
| 2 | 2 | |
| 3 | 3 | |
| 4 | 4 | |
| 5 | 5 | Wahlziffern nach CCITT-Code (z. B. MFV) |
| 6 | 6 | |
| 7 | 7 | |
| 8 | 8 | |
| 9 | 9 | |
| 10 | 0 | |
| 11 | ⧧ | Zusatzsignale (Wähltastatur) |
| 12 | * | |
| 13 | | |
| 14 | | Ergänzungssignale |
| 15 | | (im 2×1-aus-4-Code enthalten) |
| 16 | | |
| 17 | | |
| 18 | | Frequenzen für Hinweiston |
| 19 | | |
| 20 | | Hörton 425 Hz |
| 21 | | |
| 22 | | Hinweis-Ansagen |
| 23 | | |
| 24 | | Zeitansage |
| 25 | | Wetterbericht |
| 26 | | Nachrichten |
| 27 | | Theater-Programme |
| 28 | | |
| 29 | | Sonstiges |
| 30 | | |

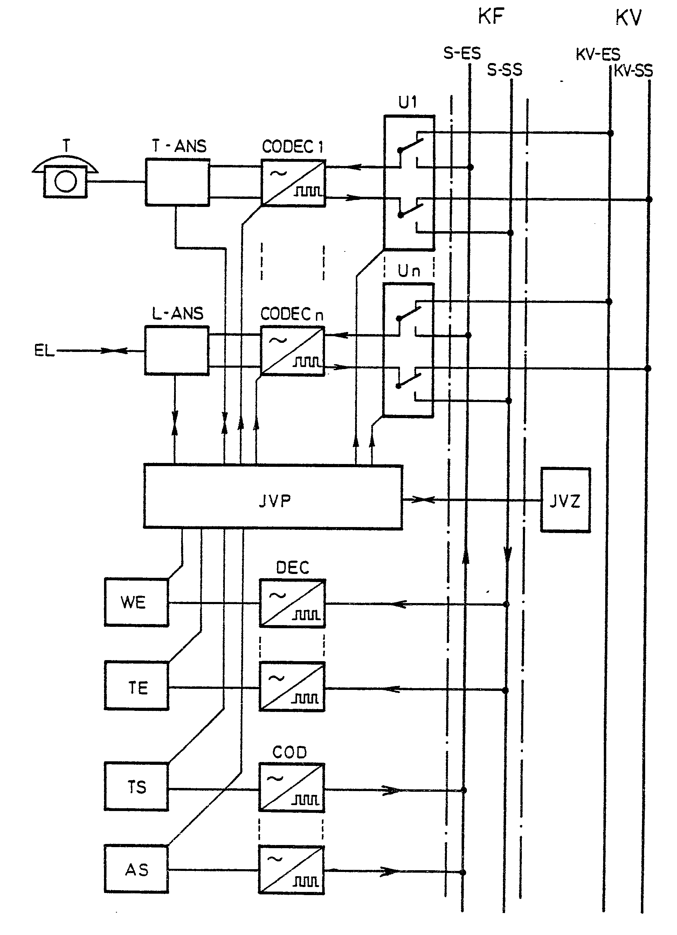

## Patentansprüche

1. Schaltungsanordnung für zeitmultiplex digital durchschaltende Fernmelde-, insbesondere Fernsprechvermittlungsanlagen mit einem besonderen Koppelfeld (KF) für die Ankopplung von Hörzeichen an Anschlußorgane (T-ANS, L-ANS), das neben dem für den Austausch von Sprech- und Dateninformationen vorgesehenen Verbindungskoppelfeld (KV) die Verbindung zwischen Anschlußorganen (T-ANS, L-ANS) und Hörzeichensendern herstellt und digital arbeitet, dadurch gekennzeichnet, daß das besondere Koppelfeld (KF) sowohl eine Sendesammelschiene (S-SS) enthält, an die Tonwahlempfänger (WE) und Tonempfänger angeschaltet sind, mit denen die Anschlußorgane (T-ANS, L-ANS) verbunden werden, wenn tonfrequente Wahlinformationen oder Sonderinformationssignale erwartet werden, als auch eine Empfangssammelschiene (S-ES) besitzt, bei der verschiedenen Sondersignalen jeweils ein eigener Zeitkanal fest zugeordnet ist, wobei Schaltmittel (U) die Verbindung der Anschlußorgane wahlweise zur entsprechenden Sammelschienen (S-ES, S-SS) herstellen.

2. Schaltungsanordnung nach Anspruch 1, dadurch gekennzeichnet, daß an jeder der einem Anschlußorgan zugeordneten Sende- und Empfangseinrichtung (CODEC) Schaltmittel (U) vorgesehen sind, die eine wahlweise direkte Anschaltung an das besondere Koppelfeld (KF) mit voller Erreichbarkeit oder eine Anschaltung an das Verbindungskoppelfeld (KV) bewirken.

3. Schaltungsanordnung nach Anspruch 1, dadurch gekennzeichnet, daß die Signale aus Einzeltönen und auch aus Sprachinformation (Ansagetexte) bestehen.

4. Schaltungsanordnung nach einem der Ansprüche 1 bis 3, dadurch gekennzeichnet, daß der Rhythmus eines Hörzeichens durch die der Sende- und Empfangseinrichtung eines Anschlußorgans zugeordneten Schaltmittel (U) gesteuert wird.

5. Schaltungsanordnung nach einem der Ansprüche 1 bis 3, dadurch gekennzeichnet, daß die Rhythmussteuerung eines empfangenen Hörtones innerhalb der Empfangseinrichtung (CODEC) erfolgt.

6. Schaltungsanordnung nach einem der Ansprüche 1 bis 3, dadurch gekennzeichnet, daß der Rhythmus des Hörtones innerhalb der Anschlußschaltung (ANS) gesteuert wird.

## Claims

1. Circuitry for time division multiplex digital switching telecommunication exchanges, in particular telephone exchanges having a special coupling network (KF) for switching audio-signals to terminal units (T-ANS, L-ANS) which, besides the connection network (KV) provided for the interchange of speech and data information, sets up the connection between terminal units (T-ANS, L-ANS) and audio signal senders and works digitally, comprising that the special coupling network (KF) consists of a sending bus (S-SS) with tone-dialling receivers (WE) linked to it, to which the terminal units (T-ANS, L-ANS) are connected, if tonefrequency dialling or special-information-signals are expected, a receiving bus (S-ES in which an own time-channel is associated with each different special signal and means for selectively switching (U) the connection of the terminal units to suitable busses (S-ES, S-SS).

2. A Circuitry as claimed in Claim 1, comprising that means for selectively switching (U) are associated to each sender and transmitter (ODEC) belonging to a terminal unit, by which a selectively connecting to the special coupling network (KF) with a full availability or the connection network (KV) is effected.

3. A Circuitry as claimed in Claim 1, comprising that the signals consist of single tones or speech information (announcement-texts).

4. A Circuitry as claimed in one of the Claims 1 to 3, wherein the sequence of an audible tone is controlled in the switching unit (U) that is associated with the codec of a terminal.

5. A Circuitry as claimed in one of the Claims 1 to 3, wherein the controlling of the sequence of a received audio tone takes place within the codec.

6. A Circuit arrangement as claimed in one of the claims 1 to 3, comprising that the sequence of the audio-tone is controlled within the terminal circuit (ANS).

## Revendications

1. Circuit de commutation pour systèmes de télécommunications, notamment téléphoniques multiplex temporels à commutation numérique comportant un champ de couplage spécial (KF) pour coupler des tonalités aux organes de raccordement (T-ANS, L-ANS) qui, à côté du champ de couplage (KV) prévu pour l'échange des informations vocales et des données, établit la liaison entre les organes (T-ANS, L-ANS) et les émetteurs de tonalités, son fonctionnement étant numérique, caractérisé en ce que le champ de couplage spécial (KF) comprend aussi bien une barre de concentration émettrice (S-SS), sur laquelle sont commutés des récepteurs à fréquence acoustique (WE) qui sont connectés aux organes de raccordement (T-ANS, L-ANS) lorsque sont attendus des informations à fréquence acoustique ou des signaux d'information spéciale, qu'une barre de concentration réceptrice (S-ES) du type sur lequel une voie temporelle propre est fixement associée à différents signaux particuliers, des moyens de communication (U) établissant sélectivement la liaison des organes de raccordement vers des barres de concentration correspondantes (S-ES, S-SS).

2. Circuit de commutation selon la revendication 1, caractérisé en ce que chaque émetteur et récepteur (CODEC) associé à un organe de connexion comporte des moyens de commutation (U) qui réalisent une commutation sélective directe vers le champ de couplage particulier (KF) avec une accessibilité totale ou une commutation vers le champ de couplage de liaison (KV).

3. Circuit de commutation selon la revendication 1, caractérisé en ce que les signaux sont constitués de tonalités distinctes et également par des informations vocales (messages).

4. Circuit de commutation selon l'une des revendications 1 à 3, caractérisé en ce que le rythme d'un signal audio est piloté par les moyens de commutation (U) associés au système et récepteur d'un de connexion.

5. Circuit de commutation selon l'une des revendications 1 à 3, caractérisé en ce que la commande du rythme d'un signal audio reçu est effectuée dans le système récepteur (CODEC).

6. Circuit de commutation selon l'une des revendications 1 à 3, caractérisé en ce que le rythme d'une tonalité est piloté dans le circuit de connexion (ANS).

0 005 220

7